# EUROPÄISCHE PATENTSCHRIFT

(11) **EP 1 744 878 B1**
(45) Veröffentlichungstag und Bekanntmachung des Hinweises auf die Patenterteilung: **22.04.2015**
(21) Anmeldenummer: 05745727.7
(22) Anmeldetag: 03.05.2005
(51) Int. Cl.: B42D 25/45, B32B 27/30, B32B 27/36, B41M 3/14, G06K 19/077, B42D 25/00

(54) **KARTENSCHICHTVERBUND**
LAMINATED CARD COMPOSITE
COMPOSITE STRATIFIE POUR LA FABRICATION DE CARTES

(30) Priorität: 06.05.2004 DE 102004022391; 06.05.2004 US 568245 P
(43) Veröffentlichungstag der Anmeldung: 24.01.2007
(73) Patentinhaber: Giesecke & Devrient GmbH, 81677 München (DE)
(72) Erfinder: RIEDL, Josef, 85395 Attenkirchen (DE); JACHMANN, Jürgen, 83730 Fischbachau (DE)
(86) Internationale Anmeldenummer: PCT/EP2005/004785
(87) Internationale Veröffentlichungsnummer: WO 2005/108066

(56) Entgegenhaltungen:
- WO-A-01/62516
- WO-A-95/26872
- WO-A-03/035388

## Beschreibung

Die Erfindung betrifft einen Kartenschichtverbund für kartenförmige Datenträger, insbesondere Smartkarten, Magnetstreifenkarten, Ausweiskarten und dergleichen, einen daraus hergestellten kartenförmigen Datenträger sowie Verfahren zu deren Herstellung.

Ein Kartenschichtverbund zur Herstellung kartenförmiger Datenträger besteht in der Regel aus miteinander laminierten Kunststofffolien. Aussparungen zur Aufnahme von elektronischen Bauelementen, insbesondere einem Chipmodul, können vor oder nach dem Laminierprozess in die Kartenschichten eingebracht werden. Es ist auch bekannt, einzelne Bauelemente oder auf Karteninletts integrierte Bauelementgruppen während des Laminierprozesses - ggf. auch ohne solche Aussparungen - zwischen die Kartenschichten einzubetten. Darüber hinaus können Sicherheitsmerkmale in den Schichtverbund integriert oder von außen auf den Schichtverbund aufgebracht werden, beispielsweise Hologramme, Magnetstreifen, Sicherheitsdrucke und dergleichen. Besonderer Wert wird auch auf hochwertige Druckbilder mit einer ansprechenden Optik gelegt. In diesem Zusammenhang ist es beispielsweise bekannt, von außen sichtbare Schichten des Kartenschichtverbunds mit einer Metallschicht zu versehen, die Metallschicht zu bedrucken und anschließend mit einer transparenten Schicht zum Schutz gegen Verkratzen und Abrieb abzudecken. Der Aufdruck vor dem metallischen Hintergrund wirkt besonders attraktiv.

So beschreibt die US 4,897,533 eine Kreditkarte mit einer metallbeschichteten PET-Folie (Polyester-Folie), die zunächst auf eine PVC-Kartenkernschicht im Heißlaminierverfahren aufgeklebt, anschließend auf der Metallschicht bedruckt und schließlich durch eine transparente Deckschicht gegen Verkratzen geschützt wird. Um eine Beschädigung der bedruckten Metallschicht beim Aufbringen der Deckschicht zu vermeiden, wird zunächst das Druckbild im Siebdruck mit einer UV-vernetzenden Druckfarbe auf die Metallschicht und anschließend die Deckschicht entweder als UV-härtbarer Firnis oder als mittels einem Heizschmelzkleber aufgeklebte Polyesterfolie aufgebracht. Die Rückseite der Kartenkernschicht kann bereits zuvor bedruckt und mit einer auflaminierten transparenten PVC-Folie abgedeckt werden.

Die US 6,491,782 B1 beschreibt einen Kartenschichtverbund mit ähnlichem Aufbau, wobei jedoch der Kartenkern aus PVC zweischichtig aufgebaut ist, nämlich aus einer einfachen PVC-Folie und einer PVC-Metallschicht-Verbundfolie, die jeweils außenseitig bedruckt werden, bevor sie miteinander zur Bildung des Kartenkerns verbunden werden. Der so gebildete Kartenkern wird wiederum mit transparenten Deckschichten zum Schutz der Druckbilder abgedeckt.

Das Bedrucken von metallisierten Folien ist jedoch problematisch und erfordert in der Regel die vorherige Behandlung der zu bedruckenden Metallflächen mit einem Primer. Eine solche Vorbehandlung wird beispielsweise in der US 6,471,128 vorgeschlagen, wodurch die Metallschicht sowohl zum Bedrucken im Siebdruck als auch im Offsetdruck geeignet ist. In der Einleitung der zuvor genannten US 6,491,782 B1 wird außerdem erwähnt, dass ein direktes Bedrucken der metallisierten Folienoberfläche vermieden werden kann, wenn die Folie rückseitig bedruckt wird, was allerdings voraussetzt, dass das Folienmaterial transparent ist.

Das Bedrucken der metallisierten Folie ist problematisch, da die metallisierte Folie kratzempfindlich ist und bei der Verarbeitung beschädigt werden kann, insbesondere wenn die Metallbeschichtung vor dem Bedrucken noch mit einem Primer versehen werden muss. Ausschuss aufgrund von Fehldrucken ist ebenfalls zu befürchten. Jeglicher Ausschuss ist aber wegen der teuren metallisierten Folien möglichst zu vermeiden.

Ein weiterer Nachteil des genannten Standes der Technik liegt in dem unsymmetrischen Kartenschichtaufbau relativ zur Mittelebene des Schichtverbunds. Dadurch können unerwünschte Verwölbungen beim Abkühlvorgang nach dem Laminieren oder beim späteren Gebrauch der Karte auftreten. Ein symmetrischer Aufbau der vorbeschriebenen Kartenschichtverbunde würde dagegen so viele Schichten involvieren, dass die Fertigungskosten unwirtschaftlich und die übliche ISO-Normdicke von 0,76 +/- 0,08 mm kaum realisierbar wäre.

Aufgabe der vorliegenden Erfindung ist es daher, einen Kartenschichtverbund für kartenförmige Datenträger und einen entsprechenden kartenförmigen Datenträger sowie Verfahren zu deren Herstellung vorzuschlagen, die einen gegen Verkratzen geschützten Aufdruck vor einem metallischen Hintergrund aufweisen, wobei die Ausschussquote bei der Herstellung möglichst gering ist.

Diese Aufgabe wird durch einen Kartenschichtverbund und durch einen kartenförmigen Datenträger sowie durch Verfahren zu ihrer Herstellung mit den Merkmalen der nebengeordneten Ansprüche gelöst. In davon abhängigen Ansprüchen sind vorteilhafte Ausgestaltungen und Weiterbildungen der Erfindung angegeben.

Dementsprechend umfasst der Kartenschichtverbund eine innenliegende Schicht, die zumindest einseitig vollflächig mit einer Metallschicht versehen ist, und eine erste Kunststoffschicht zu jeder Seite der innenliegenden Schicht. Die über der metallisierten Seite liegende erste Kunststoffschicht ist transparent, damit die Metallschicht von außen als optisch brillianter Hintergrund für ein nachfolgend noch näher erläutertes Druckbild erkennbar ist. Die innenliegende, metallisierte Schicht und die beiden angrenzenden Kunststoffschichten werden als Verbundfolie zur Verfügung gestellt, die vorzugsweise unbedruckt bleiben kann, die aber auch bedruckt sein kann. Dies hat den Vorteil, dass die kratzempfindliche Metallbeschichtung durch die beiden aussenliegenden ersten Kunststoffschichten gegen äußere Einflüsse mechanisch geschützt ist. Die Verbundfolie kann daher gefahrlos hergestellt, zwischengelagert und weiterverarbeitet werden. Die Ausschussquote der teuren metallisierten Folie ist entsprechend gering.

Bei der Weiterverarbeitung zu dem erfindungsgemäßen Kartenschichtverbund wird jeweils eine weitere Folie als zweite Kunststoffschicht auf den aussenliegenden Seiten der beiden ersten Kunststoffschichten appliziert, wobei zumindest die auf der transparenten ersten Kunststoffschicht liegende zweite Kunststoffschicht wiederum transparent und desweiteren zumindest einseitig bedruckt ist, so dass das Druckbild vor dem metallischen Hintergrund sichtbar ist.

Dies bietet verschiedene Vorteile. Einerseits ist es dadurch möglich, das Druckbild auf Standardfolien, beispielsweise aus PVC, in einer beliebigen Drucktechnik herzustellen, insbesondere ohne die Notwendigkeit der vorherigen Applikation eines Primers. Andererseits lassen sich die zentrale Verbundfolie und die mit dem Druckbild versehene Folie in völlig verschiedenen Herstellungsstätten erzeugen und erst in einem wesentlich späteren Verfahrensstadium zu dem erfindungsgemäßen Kartenschichtverbund laminieren. Sofern die zentrale Verbundfolie unbedruckt bleibt, kann insoweit auch kein Ausschuss durch Fehldrucke entstehen. Ausschuss ergibt sich dann nur im Zusammenhang mit den preiswerten PVC-Folien.

Schließlich lassen sich durch den Abstand des Druckbildes von der Metallschicht - augrund der dazwischen liegenden ersten Kunststoffschicht - dreidimensionale Effekte beziehungsweise Schatteneffekte vor einem metallisch glänzenden Hintergrund erzielen. Wenn das Druckbild auf der Außenseite der zweiten Kunststoffschicht liegt, ist der Abstand zur Metallschicht besonders hoch und der so erzielte 3D-Effekt maximal.

Gemäß einer bevorzugten Ausführungsform ist die die zweite Kunststoffschicht bildende, transparente Kunststofffolie beidseitig bedruckt, so dass zwei Druckbilder in unterschiedlichen Ebenen beabstandet vor der Metallschicht angeordnet sind. Dadurch lässt sich ein besonderer 3D-Effekt erzielen. Alternativ kann das zweite Druckbild auch auf der Außenseite der ersten transparenten Kunststoffschicht der zentralen Verbundfolie aufgedruckt sein, was jedoch wegen der Ausschussgefahr durch Fehldrucke auf der teuren Verbundfolie weniger bevorzugt ist. Diese Ausschussproblematik lässt sich allerdings umgehen, wenn die Kunststoffschicht der zentralen Verbundfolie bedruckt wird, bevor sie mit der metallisierten Folie zur Bildung der Verbundfolie laminiert wird.

Sofern die zweite Kunststoffschicht außenseitig bedruckt ist, ist es zum Schutz des Druckbildes vorteilhaft, den Kartenschichtverbund mit einer transparenten Deckschicht über dem Druckbild zu versehen. Diese transparente Deckschicht wird gemäß einer Ausführungsvariante als separate Folie zur Verfügung gestellt und gemeinsam mit der zentralen Verbundfolie und den als Kunststofffolie vorliegenden zweiten Kunststoffschichten zu dem erfindungsgemäßen Kartenschichtverbund laminiert. Gemäß einer alternativen Ausführungsvariante kann die transparente Deckschicht bereits vorab auf die zweite Kunststoffschicht aufgebracht werden, beispielsweise als transparenter Lack oder wiederum als auflaminierte Folie. In diesem Fall wird die zweite Kunststoffschicht somit gemeinsam mit der Deckschicht als Schichtverbund zur Verfügung gestellt und mit der zentralen Verbundfolie zum endgültigen Kartenschichtverbund laminiert.

Der Laminiervorgang erfolgt in üblicher Weise unter Anwendung von Druck und gegebenenfalls Temperatur, wobei Klebersysteme zwischen den miteinander zu laminierenden Schichten zum Einsatz kommen können. Bevorzugt wird jedoch ein Laminierverfahren ohne zusätzliche Kleberschichten, bei dem die miteinander zu laminierenden Schichten aufgrund ihrer Materialeigenschaften allein durch Anwendung von Druck und Temperatur miteinander verschmelzen. Insofern ist es vorteilhaft, wenn die ersten Kunststoffschichten der zentralen Verbundfolie und die die daran angrenzenden, bedruckten zweiten Kunststoffschichten bildenden Kunststofffolien in etwa die selbe Erweichungstemperatur besitzen. Besonders geeignet ist beispielsweise PVC, da das Bedrucken von PVC problemlos ist. Statt PVC ist auch PETG (glykolisiertes Polyethylenterephtalat) geeignet, wobei eine Schicht auch aus PETG und die andere Schicht aus PVC sein können. Denn die Verarbeitung von PETG ist sehr ähnlich dem von PVC, mit einer Vikat-Erweichungstemperatur von ca. 70° C für PETG und von 65 bis 80° C je nach PVC-Typ.

Das Basismaterial der innenliegenden metallisierten Schicht wird vorzugsweise durch eine metallisierte PET-Folie ("Polyesterfolie"; PET=Polyethylenterephtalat) gebildet, die standardmäßig im Handel erhältlich sind. Diese Folien sind üblicherweise metallbedampft. Die metallisierte Folie kann aber auch eine Verbundfolie aus einer polymeren Trägerschicht und einer dünnen Metallfolie sein. Die Metallschicht der innenliegenden, metallisierten Schicht kann einseitig oder beidseitig vorgesehen sein, so dass die vorbeschriebenen Effekte dementsprechend entweder auf nur einer oder auf beiden Seiten der aus dem Kartenschichtverbund herzustellenden Karte sichtbar werden.

Die Deckschicht, soweit eine solche notwendig ist, wird wiederum mit einer entsprechenden Erweichungstemperatur gewählt, z.B. aus PVC, insbesondere wenn die Verbindung mit den übrigen Schichten nicht durch einen haftvermittelnden Kleber, sondern allein durch die Anwendung von Druck und Temperatur hergestellt wird.

Gemäß einer Weiterbildung der Erfindung weist zumindest ein metallisierter Bereich der innenliegenden Schicht eine beugungsoptisch wirksame Reliefstruktur auf, die beispielsweise in einem Prägeverfahren vorzugsweise vor oder gegebenenfalls auch erst nach der Metallisierung hergestellt werden kann. Die Reliefstruktur kann sich auch vollflächig über die innenliegende Schicht erstrecken. Dadurch lassen sich holographische Effekte und andere beugungsoptische Effekte - beispielsweise ein Regenbogeneffekt - im Hintergrund des Druckbilds realisieren. Als beugungsoptisch wirksame Reliefstrukturen kommen Refraktionsmuster, Hologramme, aber auch Gitterstrukturen (z.B. Kinegramm®, Pixelgramm) oder dergleichen in Betracht. Die innenliegende Kunststoffschicht kann wiederum einseitig oder beidseitig mit der metallisierten Reliefstruktur ausgestattet sein.

Abgesehen von den bereits genannten Vorteilen kann der erfindungsgemäße Kartenschichtverbund dimensionsstabil, das heißt weitgehend resistent gegen Verwölbungen, ausgelegt werden. Dies wird im wesentlichen durch die Anordnung der Verbundfolie in der Mitte des Kartenschichtverbunds erreicht. Ein idealer Aufbau wird erzielt, wenn die Dicken und die Materialen der vorbeschriebenen Schichten des Kartenschichtverbunds bezüglich der innenliegenden, metallisierten Schicht symmetrisch verteilt sind.

Nachfolgend wird die Erfindung beispielhaft anhand der begleitenden Zeichnungen beschrieben. Darin zeigen:
Figur 1 schematisch den Schichtaufbau eines Kartenschichtverbunds gemäß einer ersten Ausführungsvariante der Erfindung und
Figur 2 schematisch den Schichtaufbau eines Kartenschichtverbunds gemäß einer zweiten Ausführungsvariante der Erfindung.

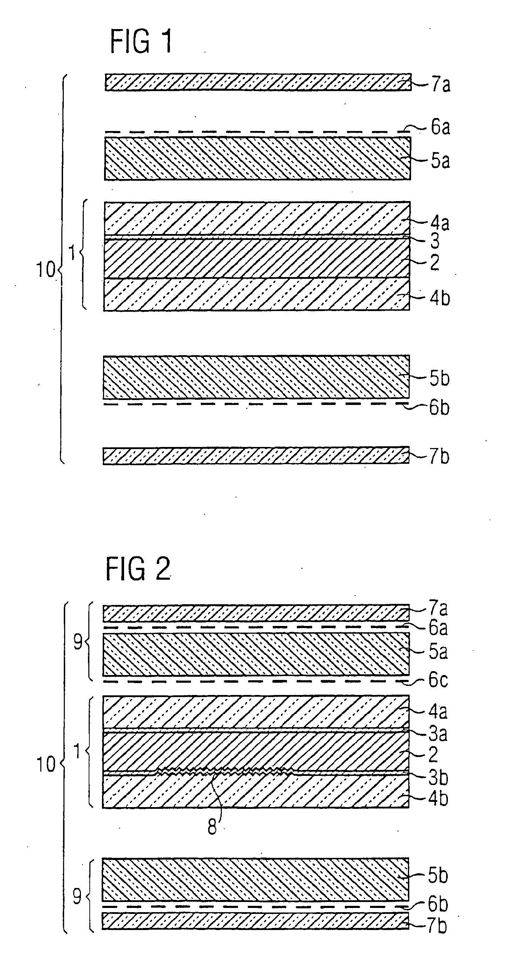

Figur 1 zeigt die Schichtanordnung eines Kartenschichtverbunds schematisch zu einem Zeitpunkt, bevor die Schichten miteinander laminiert werden. Durch die Anwendung von Druck und Temperatur - hier ohne Zwischenschaltung zusätzlicher Klebstoffschichten - werden die Schichten später zu einem einheitlichen Kartenschichtverbund 10 laminiert.

Der Schichtaufbau umfasst eine zentrale Verbundfolie 1, die aus einer innenliegenden Kunststoffschicht 2 aus Polyester (PET) mit einer Metallschicht 3 und zwei transparenten Kunststoffschichten 4a, 4b aus PVC oder PETG besteht. Zu jeder Seite der beiden transparenten Kunststoffschichten 4a, 4b wird eine Kunststofffolie 5a bzw. 5b laminiert, wobei zumindest die Kunststofffolie 5a transparent ist, damit die Metallschicht 3 durch die Kunststofffolie 5a hindurch von außen sichtbar ist. Ein Designdruck 6a und 6b ist jeweils auf der außenliegenden Oberfläche der Kunststofffolien 5a und 5b aufgebracht. Der Designdruck 6a liegt somit beabstandet vor der Metallschicht 3. Der Designdruck 6a kann alternativ auch auf der der Verbundfolie 1 zugewandten Seite der Kunststofffolie 5a liegen, wodurch der Abstand zur Metallschicht 3 geringer wird. Je größer jedoch der Abstand des Designdrucks 6a zur Metallschicht 3 ist, desto auffälliger wird ein dadurch erzielter 3D-Effekt bzw. Schatteneffekt des Designdrucks 6a vor dem metallischen Hintergrund. Die Metallschicht 3 kann in beliebiger Farbe spiegeln, insbesondere auch silbern- oder goldfarbig. Um eine innige Verbindung der Kunststoffschichten 4a, 4b mit den Kunststofffolien 5a, 5b ohne die Verwendung von Klebstoffen zu erreichen, bestehen die Kunststofffolien 5a, 5b aus PVC mit einem den Kunststoffschichten 4a, 4b in etwa entsprechenden Erweichungspunkt.

Eine transparente Kunststoffschicht 7a und 7b ist jeweils außenseitig des Kartenschichtverbunds 10 vorgesehen. Diese Kunststoffschichten 7a, 7b bestehen wiederum vorzugsweise aus PVC oder einem anderen Kunststoff, der sich ohne weiteres allein durch Anwendung von Druck und Temperatur mit den übrigen Schichten im Laminierverfahren innig verbinden lässt. Die transparenten Kunststoffschichten 7a, 7b haben den Zweck, den Designdruck 6a, 6b vor äußeren Einflüssen zu schützen. Sie können daher dünn sein, mit einer Dicke von z.B. 50 µm. Sie können entfallen, wenn der Designdruck 6a auf der der Verbundfolie 1 zugewandten Seite der Kunststofffolie 5a bzw. 5b liegt. Aus Symmetriegründen sollten die Kunststoffschichten 7a und 7b entweder auf beiden Seiten entfallen oder auf beiden Seiten vorgesehen sein, um die Gefahr der Verwölbung des Kartenschichtverbunds zu verringern.

Je nach Verwendungszweck kann auf der äußeren Seite einer oder beider transparenter Kunststoffschichten 7a bzw. 7b ein Magnetstreifen aufgebracht werden. Auch ein Unterschriftsfeld kann beispielsweise durch Aufbringen eines Unterschriftsstreifens an geeigneter Stelle auf den transparenten Kunststoffschichten 7a bzw. 7b angelegt werden.

Figur 2 zeigt ein weiteres Ausführungsbeispiel, welches sich von dem Ausführungsbeispiel gemäß Figur 1 in verschiedener Hinsicht unterscheidet. Einerseits bilden die transparenten Kunststofffolien 5a und 5b jeweils einen Verbund 9 mit den transparenten Kunststoffschichten 7a bzw. 7b. Die transparente Kunststoffschicht 7a bzw. 7b ist in diesem Falle als transparenter Lack über dem Designdruck 6a bzw. 6b aufgetragen. Sie kann aber auch aus einer Folie bestehen, die beispielsweise aufgeklebt ist.

Darüber hinaus ist die transparente Kunststofffolie 5a gemäß der in Figur 2 dargestellten Ausführungsform beidseitig mit einem Designdruck 6a und 6c versehen, so dass sich durch die beiden Designdrucke 6a, 6c ein besonderer 3D-Effekt vor einem metallisch spiegelnden Hintergrund ergibt.

Schließlich ist bei der in Figur 2 dargestellten Ausführungsform die innenliegende Kunststoffschicht 2 beidseitig mit einer Metallschicht 3a und 3b versehen, wobei die Metallschicht 3b in einem definierten Bereich eine geprägte, beugungsoptisch wirksame Reliefstruktur 8 aufweist. Auf diese Weise sind holographische Effekte und insbesondere beispielsweise ein Regenbogeneffekt zu realisieren, die hier den Hintergrund für den Designdruck 6b bilden.

Die beiden Ausführungsbeispiele gemäß Figuren 1 und 2 lassen sich in beliebiger Weise kombinieren, indem beispielsweise auf beiden Seiten der innenliegenden Kunststoffschicht 2 beugungsoptisch wirksame Reliefstrukturen 8 geprägt sind und/ oder indem die beugungsoptisch wirksame Reliefstruktur 8 als Hintergrund für die beidseitig bedruckte Kunststofffolie 5a dient. Außerdem muss die Metallschicht 3 nicht notwendigerweise vollflächig vorliegen. Beispielsweise kann die Metallschicht 3b lediglich im Bereich der beugungsoptisch wirksamen Reliefstruktur 8 vorgesehen sein.

Der beschriebene Kartenschichtverbund kann in beliebiger Weise zu einem kartenförmigen Datenträger weiterverarbeitet werden. Üblicherweise wird der Kartenschichtverbund zunächst als Rollenmaterial oder in Bogenform hergestellt. Aus den Rollen und Bögen werden anschließend die einzelnen Karten herausgetrennt, wobei vor und/ oder nach dem Trennvorgang weitere Bearbeitungsschritte zur Erzeugung der fertigen Karte liegen können. Diese Schritte zur Verarbeitung des Kartenschichtverbunds sind dem Fachmann allgemein bekannt.

Die Ausführungsformen sind in Bezug auf Kunststoffschichten beschrieben worden. Der Erfindungsgedanke ist jedoch auch bei Verwendung von Polymerschichten anstelle von Kunststoffschichten anwendbar.

## Patentansprüche

1. Kartenschichtverbund (10) für kartenförmige Datenträger, insbesondere Smartkarten, Magnetstreifenkarten, Ausweiskarten und dergleichen, umfassend:
- eine innenliegende Schicht (2), die zumindest einseitig vollflächig mit einer Metallschicht (3) versehen ist,
- eine erste Kunststoffschicht (4a, 4b) zu jeder Seite der innenliegenden Schicht (2), wobei zumindest die auf der Metallschicht (3) der innenliegenden Schicht (2) liegende erste Kunststoffschicht (4a) transparent ist, und
- eine zweite Kunststoffschicht (5a, 5b) jeweils auf der außenliegenden Seite der ersten Kunststoffschichten (4a, 4b), wobei zumindest die auf der transparenten ersten Kunststoffschicht (4a) liegende zweite Kunststoffschicht (5a) transparent ist und zumindest einseitig ein Druckbild (6a) aufweist.

2. Kartenschichtverbund nach Anspruch 1, **gekennzeichnet durch** eine transparente Deckschicht (7a) über der transparenten zweiten Kunststoffschicht (5a), insbesondere wenn das Druckbild (6a) außen auf der transparenten zweiten Kunststoffschicht (5a) liegt.

3. Kartenschichtverbund nach Anspruch 2, **dadurch gekennzeichnet, dass** die genannten Schichten einschließlich der Deckschicht (7a) miteinander laminiert sind.

4. Kartenschichtverbund nach Anspruch 3, **dadurch gekennzeichnet, dass** die Deckschicht (7a) einen Magnetstreifen aufweist.

5. Kartenschichtverbund nach Anspruch 3 oder 4, **dadurch gekennzeichnet, dass** die Deckschicht (7a) einen Unterschriftsstreifen aufweist.

6. Kartenschichtverbund nach Anspruch 2, **dadurch gekennzeichnet, dass** die Deckschicht (7a) eine transparente Lackschicht ist.

7. Kartenschichtverbund nach einem der Ansprüche 1 bis 6, **dadurch gekennzeichnet, dass** die Dicken und die Materialien der genannten Schichten bezüglich der innenliegenden metallisierten Schicht (2, 3) symmetrisch verteilt sind.

8. Kartenschichtverbund nach einem der Ansprüche 1 bis 7, **dadurch gekennzeichnet, dass** die innenliegende Schicht (2) aus einem Thermoplast, insbesondere PET, besteht.

9. Kartenschichtverbund nach einem der Ansprüche 1 bis 8, **dadurch gekennzeichnet, dass** die transparente erste Kunststoffschicht (4a) aus einem Thermoplast, insbesondere PVC oder PETG, besteht.

10. Kartenschichtverbund nach einem der Ansprüche 1 bis 9, **dadurch gekennzeichnet, dass** die mit dem Druckbild (6a) versehene, transparente zweite Kunststoffschicht (5a) aus einem Thermoplast, insbesondere PVC, besteht.

11. Kartenschichtverbund nach einem der Ansprüche 1 bis 10, **dadurch gekennzeichnet, dass** die transparente zweite Kunststoffschicht (5a) beidseitig Druckbilder (6a, 6c) aufweist.

12. Kartenschichtverbund nach einem der Ansprüche 1 bis 10, **dadurch gekennzeichnet, dass** die transparente erste Kunststoffschicht (4a) ein Druckbild aufweist.

13. Kartenschichtverbund nach einem der Ansprüche 1 bis 12, **dadurch gekennzeichnet, dass** zumindest ein Bereich der innenliegenden Schicht (2) eine beugungsoptisch wirksame Reliefstruktur (8) aufweist.

14. Kartenförmiger Datenträger, insbesondere Smartkarte, Magnetstreifenkarte, Ausweiskarte oder dergleichen, mit einem Kartenkörper aus einem Kartenschichtverbund (10) gemäß einem der Ansprüche 1 bis 13.

15. Verfahren zur Herstellung eines Kartenschichtverbunds (10) für kartenförmigen Datenträger, insbesondere Smartkarten, Magnetstreifenkarten, Ausweiskarten und dergleichen, umfassend die Schritte:
- zur Verfügung Stellen einer Verbundfolie (1) mit einer innenliegenden Schicht (2), die zumindest einseitig vollflächig mit einer Metallschicht (3) versehen ist, und mit einer Kunststoffschicht (4a, 4b) zu jeder Seite der innenliegenden Schicht (2), wobei zumindest die auf der Metallschicht (3) der innenliegenden Schicht (2) liegende erste Kunststoffschicht (4a) transparent ist,
- Anordnen einer Kunststofffolie (5a, 5b) jeweils auf der außenliegenden Seite der Kunststoffschichten (4a, 4b), wobei zumindest die auf der transparenten Kunststoffschicht (4a) liegende Kunststofffolie (5a) transparent ist und zumindest einseitig ein Druckbild (6a) aufweist, und
- Laminieren der Verbundfolie (1) mit den Kunststofffolien (5a, 5b).

16. Verfahren nach Anspruch 15, **gekennzeichnet durch** den weiteren Schritt des Vorsehens einer transparenten Deckschicht (7a) über der transparenten Kunststofffolie (5a), insbesondere wenn das Druckbild (6a) außen auf der transparenten Kunststofffolie (5a) liegt.

17. Verfahren nach Anspruch 16, **dadurch gekennzeichnet, dass** die transparente Deckschicht (7a) mit einem Magnetstreifen versehen wird.

18. Verfahren nach Anspruch 16 oder 17, **dadurch gekennzeichnet, dass** die transparente Deckschicht (7a) mit einem Unterschriftsstreifen versehen wird.

19. Verfahren nach einem der Ansprüche 16 bis 18, **dadurch gekennzeichnet, dass** die transparente Kunststofffolie (5a) beim Schritt des Anordnens als Verbund mit der Deckschicht (7a) zur Verfügung gestellt wird.

20. Verfahren nach Anspruch 18, **dadurch gekennzeichnet, dass** die Deckschicht (7a) als separate Folie zur Verfügung gestellt wird, wobei die Deckschicht (7a) mit der transparenten Kunststofffolie (5a) durch den Schritt des Laminierens verbunden wird.

21. Verfahren nach einem der Ansprüche 15 bis 20, **gekennzeichnet durch** den weiteren Schritt des Wählens der Dicken und Materialien der genannten Schichten und Folien derart, dass sie bezüglich der innenliegenden metallisierten Schicht (2, 3) symmetrisch verteilt sind.

22. Verfahren nach einem der Ansprüche 15 bis 21, **dadurch gekennzeichnet, dass** die innenliegende Schicht (2) aus einem Thermoplast, insbesondere PET, besteht.

23. Verfahren nach einem der Ansprüche 15 bis 22, **dadurch gekennzeichnet dass** die transparente Kunststoffschicht (4a) der Verbundfolie (1) aus einem Thermoplast, insbesondere PVC oder PETG, besteht.

24. Verfahren nach einem der Ansprüche 15 bis 23, **dadurch gekennzeichnet, dass** die mit dem Druckbild (6a) versehene, transparente Kunststofffolie (5a) aus einem Thermoplast, insbesondere PVC, besteht.

25. Verfahren nach einem der Ansprüche 15 bis 24, **dadurch gekennzeichnet, dass** die transparente Kunststofffolie (5a) vor dem Schritt des Laminierens beidseitig mit Druckbildern (6a, 6c) versehen wird.

26. Verfahren nach einem der Ansprüche 15 bis 24, **dadurch gekennzeichnet, dass** die transparente Kunststoffschicht (4a) mit einem Druckbild versehen wird.

27. Verfahren nach einem der Ansprüche 1 bis 26, **dadurch gekennzeichnet, dass** zumindest ein Bereich der innenliegenden Schicht (2) eine beugungsoptisch wirksame Reliefstruktur (8) aufweist.

28. Verfahren zur Herstellung eines kartenförmigen Datenträgers, insbesondere Smartkarte, Magnetstreifenkarte, Ausweiskarte oder dergleichen, umfassend die Schritte des Verfahrens nach einem der Ansprüche 15 bis 27 und den weiteren Schritt des Heraustrennens eines Kartenkörpers für den kartenförmigen Datenträger aus dem Kartenschichtverbund.

29. Verfahren nach Anspruch 28, **gekennzeichnet durch** weitere Herstellungsschritte vor und/ oder nach dem Schritt des Heraustrennens zur Integration und/ oder Applikation von elektronischen Bauelementen, Magnetstreifen und/oder anderen Elementen in und/oder auf dem Kartenkörper.

## Claims

1. A card laminate (10) for card-shaped data carriers, in particular smart cards, magnetic strip cards, identity cards and the like, comprising:
- an interior layer (2) furnished with a metal layer (3) over the full area at least on one side,
- a first plastic layer (4a, 4b) on each side of the interior layer (2), with at least the first plastic layer (4a) overlying the metal layer (3) of the interior layer (2) being transparent, and
- a second plastic layer (5a, 5b) on the exterior sides of the first plastic layers (4a, 4b) in each case, with at least the second plastic layer (5a) overlying the transparent first plastic layer (4a) being transparent and having a printed image (6a) at least on one side.

2. The card laminate according to claim 1, **characterized by** a transparent cover layer (7a) over the transparent second plastic layer (5a), in particular when the printed image (6a) is located externally on the transparent second plastic layer (5a).

3. The card laminate according to claim 2, **characterized in that** the stated layers including the cover layer (7a) are laminated together.

4. The card laminate according to claim 3, **characterized in that** the cover layer (7a) has a magnetic strip.

5. The card laminate according to claim 3 or 4, **characterized in that** the cover layer (7a) has a signature strip.

6. The card laminate according to claim 2, **characterized in that** the cover layer (7a) is a transparent lacquer layer.

7. The card laminate according to any of claims 1 to 6, **characterized in that** the thicknesses and the materials of the stated layers are distributed symmetrically with respect to the interior metallized layer (2, 3).

8. The card laminate according to any of claims 1 to 7, **characterized in that** the interior layer (2) consists of a thermoplastic, in particular PET.

9. The card laminate according to any of claims 1 to 8, **characterized in that** the transparent first plastic layer (4a) consists of a thermoplastic, in particular PVC or PETG.

10. The card laminate according to any of claims 1 to 9, **characterized in that** the transparent second plastic layer (5a) furnished with the printed image (6a) consists of a thermoplastic, in particular PVC.

11. The card laminate according to any of claims 1 to 10, **characterized in that** the transparent second plastic layer (5a) has printed images (6a, 6c) on both sides.

12. The card laminate according to any of claims 1 to 10, **characterized in that** the transparent first plastic layer (4a) has a printed image.

13. The card laminate according to any of claims 1 to 12, **characterized in that** at least one region of the interior layer (2) has an optically-diffractively active relief structure (8).

14. A card-shaped data carrier, in particular smart card, magnetic strip card, identity card or the like, having a card body made of a card laminate (10) according to any of claims 1 to 13.

15. A method for manufacturing a card laminate (10) for card-shaped data carriers, in particular smart cards, magnetic strip cards, identity cards and the like, comprising the steps of:
- supplying a foil laminate (1) having an interior layer (2) which is furnished with a metal layer (3) over the full area at least on one side, and having a plastic layer (4a, 4b) on each side of the interior layer (2), with at least the first plastic layer (4a) overlying the metal layer (3) of the interior layer (2) being transparent,
- arranging a plastic foil (5a, 5b) on the exterior sides of the plastic layers (4a, 4b) in each case, with at least the plastic foil (5a) overlying the transparent plastic layer (4a) being transparent and having a printed image (6a) at least on one side, and
- laminating the foil laminate (1) with the plastic foils (5a, 5b).

16. The method according to claim 15, **characterized by** the further step of providing a transparent cover layer (7a) over the transparent plastic foil (5a), in particular when the printed image (6a) is located externally on the transparent plastic foil (5a).

17. The method according to claim 16, **characterized in that** the transparent cover layer (7a) is furnished with a magnetic strip.

18. The method according to claim 16 or 17, **characterized in that** the transparent cover layer (7a) is furnished with a signature strip.

19. The method according to any of claims 16 to 18, **characterized in that** the transparent plastic foil (5a) is supplied as a laminate with the cover layer (7a) during the arranging step.

20. The method according to claim 18, **characterized in that** the cover layer (7a) is supplied as a separate foil, with the cover layer (7a) being connected by the laminating step to the transparent plastic foil (5a).

21. The method according to any of claims 15 to 20, **characterized by** the further step of selecting the thicknesses and materials of the stated layers and foils such that they are distributed symmetrically with respect to the interior metallized layer (2, 3).

22. The method according to any of claims 15 to 21, **characterized in that** the interior layer (2) consists of a thermoplastic, in particular PET.

23. The method according to any of claims 15 to 22, **characterized in that** the transparent plastic layer (4a) of the foil laminate (1) consists of a thermoplastic, in particular PVC or PETG.

24. The method according to any of claims 15 to 23, **characterized in that** the transparent plastic foil (5a) furnished with the printed image (6a) consists of a thermoplastic, in particular PVC.

25. The method according to any of claims 15 to 24, **characterized in that** the transparent plastic foil (5a) is furnished with printed images (6a, 6c) on both sides before the laminating step.

26. The method according to any of claims 15 to 24, **characterized in that** the transparent plastic layer (4a) is furnished with a printed image.

27. The method according to any of claims 1 to 26, **characterized in that** at least one region of the interior layer (2) has an optically-diffractively active relief structure (8).

28. A method for manufacturing a card-shaped data carrier, in particular smart card, magnetic strip card, identity card or the like, comprising the steps of the method according to any of claims 15 to 27 and the further step of detaching a card body for the card-shaped data carrier from the card laminate.

29. The method according to claim 28, **characterized by** further manufacturing steps before and/or after the detaching step for integrating and/or applying electronic components, magnetic strips and/or other elements in and/or on the card body.

## Revendications

1. Composite multicouche pour cartes (10) pour supports de données en forme de carte, notamment cartes à puce, cartes à bande magnétique, cartes d'identification et objets similaires, comprenant:
- une couche interne (2) qui, au moins d'un côté, est pourvue à pleine surface d'une couche métallique (3),
- une première couche en matière plastique (4a, 4b) de chaque côté de la couche interne (2), au moins la première couche en matière plastique (4a) située sur la couche métallique (3) de la couche interne (2) étant transparente, et
- une deuxième couche en matière plastique (5a, 5b) respectivement sur le côté externe de la première couche en matière plastique (4a, 4b), au moins la deuxième couche en matière plastique (5a) située sur la première couche en matière plastique (4a) transparente étant transparente, et comportant au moins d'un côté une image imprimée (6a).

2. Composite multicouche pour cartes selon la revendication 1, **caractérisée par** une couche de recouvrement (7a) transparente par-dessus la deuxième couche en matière plastique (5a) transparente, notamment quand l'image imprimée (6a) se trouve à l'extérieur sur la deuxième couche en matière plastique (5a) transparente.

3. Composite multicouche pour cartes selon la revendication 2, **caractérisée en ce que** lesdites couches y compris la couche de recouvrement (7a) sont laminées entre elles.

4. Composite multicouche pour cartes selon la revendication 3, **caractérisée en ce que** la couche de recouvrement (7a) comporte une piste magnétique.

5. Composite multicouche pour cartes selon la revendication 3 ou 4, **caractérisée en ce que** la couche de recouvrement (7a) comporte une piste de signature.

6. Composite multicouche pour cartes selon la revendication 2, **caractérisée en ce que** la couche de recouvrement (7a) est une couche de vernis transparente.

7. Composite multicouche pour cartes selon une des revendications de 1 à 6, **caractérisée en ce que** les épaisseurs et les matériaux desdites couches sont, par rapport à la couche métallisée interne (2, 3), répartis symétriquement.

8. Composite multicouche pour cartes selon une des revendications de 1 à 7, **caractérisée en ce que** la couche interne (2) consiste en un thermoplaste, notamment en du PET.

9. Composite multicouche pour cartes selon une des revendications de 1 à 8, **caractérisée en ce que** la première couche en matière plastique (4a) transparente consiste en un thermoplaste, notamment en du PVC ou PETG.

10. Composite multicouche pour cartes selon une des revendications de 1 à 9, **caractérisée en ce que** la deuxième couche en matière plastique (5a) transparente pourvue de l'image imprimée (6a) consiste en un thermoplaste, notamment en du PVC.

11. Composite multicouche pour cartes selon une des revendications de 1 à 10, **caractérisée en ce que** la deuxième couche en matière plastique (5a) transparente comporte des deux côtés des images imprimées (6a, 6c).

12. Composite multicouche pour cartes selon une des revendications de 1 à 10, **caractérisée en ce que** la première couche en matière plastique (4a) transparente comporte une image imprimée.

13. Composite multicouche pour cartes selon une des revendications de 1 à 12, **caractérisée en ce qu'**au moins une zone de la couche interne (2) comporte une structure en relief (8) à effet de diffraction optique.

14. Support de données en forme de carte, notamment cartes à puce, carte à bande magnétique, carte d'identification et objet similaire, ayant un corps de carte consistant en un composite multicouche pour cartes (10) selon une des revendications de 1 à 13.

15. Procédé de fabrication d'un composite multicouche pour cartes (10) pour supports de données en forme de carte, notamment cartes à puce, cartes à bande magnétique, cartes d'identification et objets similaires, comprenant les étapes:
- mise à disposition d'un film composite (1) ayant une couche interne (2) qui, au moins d'un côté, est pourvue à pleine surface d'une couche métallique (3), et d'une couche en matière plastique (4a, 4b) de chaque côté de la couche interne (2), au moins la première couche en matière plastique (4a) située sur la couche métallique (3) de la couche interne (2) étant transparente,
- agencement d'un film en matière plastique (5a, 5b) respectivement sur le côté externe des couches en matière plastique (4a, 4b), au moins le film en matière plastique (5a) situé sur la couche en matière plastique (4a) transparente étant transparent et comportant au moins d'un côté une image imprimée (6a), et
- laminage du film composite (1) avec les couches en matière plastique (5a, 5b).

16. Procédé selon la revendication 15, **caractérisé par** l'étape supplémentaire de la prévision d'une couche de recouvrement (7a) transparente par-dessus la couche en matière plastique (5a) transparente, notamment quand l'image imprimée (6a) se trouve à l'extérieur sur le film en matière plastique (5a) transparent.

17. Procédé selon la revendication 16, **caractérisé en ce que** la couche de recouvrement (7a) transparente est pourvue d'une piste magnétique.

18. Procédé selon la revendication 16 ou 17, **caractérisé en ce que** la couche de recouvrement (7a) transparente est pourvue d'une piste de signature.

19. Procédé selon une des revendications de 16 à 18, **caractérisé en ce que** le film en matière plastique (5a) transparent est mis à disposition lors de l'étape de l'agencement en tant que composite avec la couche de recouvrement (7a).

20. Procédé selon la revendication 18, **caractérisé en ce que** la couche de recouvrement (7a) est mise à disposition en tant que film distinct, la couche de recouvrement (7a) étant jointe au film en matière plastique (5a) transparent par l'étape du laminage.

21. Procédé selon une des revendications de 15 à 20, **caractérisé par** l'étape supplémentaire de la sélection des épaisseurs et des matériaux desdits couches et films, de telle sorte que, par rapport à la couche métallisée interne (2, 3), ils sont répartis symétriquement.

22. Procédé selon une des revendications de 15 à 21, **caractérisé en ce que** la couche interne (2) consiste en un thermoplaste, notamment en du PET.

23. Procédé selon une des revendications de 15 à 22, **caractérisé en ce que** la couche en matière plastique (4a) transparente du film composite (1) consiste en un thermoplaste, notamment en du PVC ou PETG.

24. Procédé selon une des revendications de 15 à 23, **caractérisé en ce que** le film en matière plastique (5a) transparent pourvu de l'image imprimée (6a) consiste en un thermoplaste, notamment en du PVC.

25. Procédé selon une des revendications de 15 à 24, **caractérisé en ce que** le film en matière plastique (5a) transparent est, avant l'étape du laminage, pourvu, des deux côtés, d'images imprimées (6a, 6c).

26. Procédé selon une des revendications de 15 à 24, **caractérisé en ce que** la couche en matière plastique (4a) transparente est pourvue d'une image imprimée.

27. Procédé selon une des revendications de 1 à 26, **caractérisé en ce qu'**au moins une zone de la couche interne (2) comporte une structure en relief (8) à effet de diffraction optique.

28. Procédé de fabrication d'un support de données en forme de carte, notamment carte à puce, carte à bande magnétique, carte d'identification et objet similaire, comprenant les étapes du procédé selon une des revendications de 15 à 27 et l'étape supplémentaire du découpage d'un corps de carte pour le support de données en forme de carte à partir du composite multicouche pour cartes.

29. Procédé selon la revendication 28, **caractérisé par** des étapes supplémentaires de fabrication avant et/ou après l'étape du découpage pour l'intégration et/ou l'application de composants électroniques, de pistes magnétiques et/ou d'autres éléments dans et/ou sur le corps de carte.
